# EUROPÄISCHE PATENTSCHRIFT

(11) **EP 2 907 699 B1**
(45) Veröffentlichungstag und Bekanntmachung des Hinweises auf die Patenterteilung: **19.07.2017**
(21) Anmeldenummer: 14003615.3
(22) Anmeldetag: 23.10.2014
(51) Int. Cl.: B60Q 1/50, B60Q 1/52, B60Q 9/00

(54) **Kraftfahrzeug**
Motor vehicle
Véhicule automobile

(30) Priorität: 15.02.2014 DE 102014002110
(43) Veröffentlichungstag der Anmeldung: 19.08.2015
(73) Patentinhaber: AUDI AG, 85045 Ingolstadt (DE)
(72) Erfinder: Freudenberger, Mona, 85049 Ingolstadt (DE); Spreitzer, Christian, 85051 Ingolstadt (DE)
(74) Vertreter: Thielmann, Frank

(56) Entgegenhaltungen:
- DE-A1-102009 033 066
- DE-A1-102009 048 619
- DE-A1-102011 112 985

## Beschreibung

Die Erfindung betrifft ein Kraftfahrzeug, umfassend eine Einrichtung zur Erfassung eines Abstands zu einem in der Nähe des Fahrzeugs befindlichen Hindernis sowie zur Ausgabe einer Warninformation bei Erreichen eines definierten Mindestabstands zu dem Hindernis.

Moderne Kraftfahrzeuge verfügen häufig über ein Fahrerassistenzsystem, das den Einparkvorgang, sei es vorwärts oder rückwärts, unterstützt, indem potentielle, im Umfeld des Fahrzeugs befindliche Hindernisse, seien es stehende Hindernisse, seien es Personen, mit geeigneten Sensoren wie Ultraschallsensoren oder dergleichen erfasst werden. Befindet sich das Fahrzeug in einem Rückwärtseinparkvorgang und sensieren beispielsweise die heckseitig verbauten Ultraschallsensoren ein Hindernis, das im Erfassungsbereich liegt, so wird über die zugeordnete Steuerungseinrichtung des Fahrerassistenzsystems der Abstand zu dem Hindernis ermittelt. Mit Erreichen eines Mindestabstands wird dem Fahrer im Fahrzeuginneren eine akustische oder optische Anzeige gegeben, die ihn auf das potentielle Hindernis hinweist. Häufig werden dabei Piepstöne dabei verwendet, aber auch einzelne Lichtpunktdarstellungen, wobei sich aus der Tonfrequenz respektive der Lichtpunktfarbe der Abstand, der sich nach Gabe der ersten Anzeige ja weiter verringern kann, erkennen lässt.

Für den Fahrer ist also eine eindeutige Erfassungsmöglichkeit gegeben, ein etwaiges Hindernis zu erkennen, so dass er rechtzeitig entsprechende Maßnahmen ergreifen kann, indem er rechtzeitig bremst respektive den Einparkvorgang abbricht und rangiert etc.

Handelt es sich bei dem erfassten Hindernis um eine Person die am Straßenrand steht, so ist nicht immer sichergestellt, dass die Person das sich annähernde Fahrzeug erfasst. Dies ist darin begründet, dass moderne Kraftfahrzeuge sehr leise sind, das heißt, dass die Person das Motorengeräusch nicht immer wahrnimmt, noch dazu, wenn Umgebungsgeräusche gegeben sind. Im Falle von Hybrid- oder Elektrofahrzeugen sind häufig keinerlei Fahrgeräusche zu vernehmen, so dass hier die Gefahr noch größer ist, dass eine Person ein sich annäherndes Auto überhaupt nicht bemerkt. Ein gattungsgemäßes Kraftfahrzeug ist aus DE 10 2009 033 066 bekannt.

Der Erfindung liegt damit das Problem zugrunde, ein Kraftfahrzeug mit verbesserter Warnmöglichkeit anzugeben.

Zur Lösung dieses Problems ist erfindungsgemäß ein Kraftfahrzeug vorgesehen, welches die Merkmale nach Anspruch 1 aufweist. Beim erfindungsgemäßen Kraftfahrzeug ist eine aktive Warnung außerhalb des Fahrzeugs befindlicher Personen, die als Hindernis erfasst werden, vorgesehen, wobei diese Warninformation dann gegeben wird, wenn das Fahrzeug einen Mindestabstand zu der erfassten Person eingenommen hat, sowie natürlich mit zunehmender Annäherung. Durch dieses Lichtsignal ist es möglich, dass die Person auf das sich annähernde Fahrzeug aufmerksam wird, so dass die Person aus dem Bewegungsweg des Fahrzeug treten kann und das Hindernis nicht mehr als solches erfasst wird. Das Lichtsignal, das bevorzugt in Form mehrerer hintereinander folgender Lichtpulse gebbar ist, die mittels einer geeigneten Leuchteinrichtung gegeben werden, sollte eine möglichst hohe Lichtstärke aufweisen, so dass es auch bei Tag eindeutig erfasst wird. Selbstverständlich ist es denkbar, ein entsprechendes farbiges Lichtsignal zu emittieren, beispielsweise ein rotes Lichtsignal, das üblicherweise auch als Warnfarbe wahrgenommen wird.

Das Lichtsignal wird dabei nicht nur von der außerhalb des Fahrzeug befindlichen Person wahrgenommen, sondern mitunter auch vom Fahrer selbst, insbesondere wenn das Lichtsignal hinreichend hell ist. Ein besonderer Vorteil ist gegeben, wenn der Fahrer beispielsweise in einer Garage einparkt oder in einer Tiefgarage in einen Parkplatz steuert und als Hindernis in diesem Fall keine Person, sondern eine Wand erfasst. Auch hier wird, nachdem ein Hindernis erfasst wurde, mit Erreichen des Mindestabstandes das nach außen abgegebene Lichtsignal emittiert, das der Fahrer in diesem Fall natürlich sehr gut wahrnehmen kann, so dass er zusätzlich noch zu den innerhalb des Fahrzeug gegebenen Warninformationen die lichtoptische, außerhalb des Fahrzeugs gegebene Warninformation erhält.

Als Leuchteinrichtung wird eine bereits am Fahrzeug verbaute Leuchteinrichtung verwendet, beispielsweise eine Blinkleuchte, eine Bremsleuchte, eine Rückfahrleuchte oder ein Frontscheinwerfer. Nachdem diese Leuchteinrichtungen jeweils einer Fahrzeugseite zugeordnet sind und die Einrichtung zur räumlich aufgelösten Erfassung eines Hindernisses ausgebildet ist, wird diejenige Leuchteinrichtung gewählt, die benachbart zum Hindernis ist. Wird beispielsweise über die heckseitig verbauten Ultraschallsensoren erfasst, dass das Hindernis, beispielsweise die Person, im Bereich der rechten Fahrzeugseite ist, so wird beispielsweise über das Fahrerassistenzsystem die rechte Bremsleuchte angesteuert, so dass diese das bevorzugt gepulste Lichtsignal abgibt. Steht die Person an der rechten vorderen Seite, so kann beispielsweise das Fernlicht zur pulsartigen Lichtsignalgabe angesteuert werden und ähnliches. Das heißt, dass einerseits eine quasi räumliche Auflösung hinsichtlich der Lichtsignalgabe möglich ist, andererseits aber auch keine zusätzlichen Leuchteinrichtungen genutzt werden, sondern diejenigen, die ohnehin bereits fahrzeugseitig verbaut sind. Erfindungsgemäß ist das Lichtsignal bei Verwendung der genannten Leuchteinrichtungen mit einer verglichen mit dem Normalbetrieb der Leuchteinrichtung erhöhten Lichtstärke gebbar. Die Bremsleuchte oder der Blinker etc. leuchten also wesentlich heller, wenn das Warnsignal gegeben wird, als im normalen Betrieb, wenn der Fahrer das Bremspedal oder den Blinker betätigt. Hierüber kann auch bei Tag ein sehr auffälliges, helles respektive sogar grelles Lichtsignal gegeben werden, das die Person, so das Hindernis eine solche ist, ohne weiteres erfassen kann.

Das Fahrerassistenzsystem ist natürlich auch in der Lage, im Fahrzeuginnenraum ein entsprechendes Warnsignal, sei es akustisch, sei es optisch oder in beiden Formen, zu geben. Das heißt, dass sowohl fahrzeuginnenseitig als auch fahrzeugaußenseitig Warnsignale gegeben werden können. In diesem Fall ist es besonders zweckmäßig, wenn, wie erfindungsgemäß ferner vorgesehen ist, die Einrichtung zur Gabe eines akustischen oder optischen, im Fahrzeuginnenraum erfassbaren Warnsignal bei Erfassung eines ersten Mindestabstands zum Hindernis und zur Gabe des Lichtsignals erst bei Erfassung eines zweiten, kürzeren Mindestabstands ausgebildet ist. Gemäß dieser Erfindungsausgestaltung sind folglich zwei Abstandsschwellwerte gegeben, die an die Gabe des fahrzeuginnenseitigen und des fahrzeugaußenseitigen Warnsignals gesetzt sind. Nähert sich der Fahrer beispielsweise bei einer Rückwärtsfahrt dem Hindernis an und wird ein Hindernis beispielsweise mit einem Abstand von 1,5 m erfasst, so kann der Fahrer erstmals eine fahrzeuginnenseitige Warninformation erhalten, beispielsweise eine Piepstonabfolge mit relativ niedriger Frequenz oder geringerer Lautstärke, oder eine entsprechende optische Displaydarstellung etc. Ein äußeres Warnsignal wird in diesem Fall noch nicht gegeben, da der Abstand mit 1,5 m ja noch beachtlich groß ist und davon ausgegangen werden kann, dass die Person, sofern eine Person das Hindernis darstellt, durchaus das Fahrzeug noch erfassen kann. Mit zunehmender Annäherung wird die im Fahrzeuginneren gegebene Warntonfolge immer schneller oder lauter, auch die optische Anzeige wechselt entsprechend. Ein äußeres Warnsignal ist immer noch nicht zu geben. Erst wenn das Fahrzeug einen zweiten definierten Mindestabstand zum Hindernis aufweist, was über die Steuerungseinrichtung des Fahrerassistenzsystems respektive die Sensorik erfasst wird, beispielsweise von 50 cm, so ist ein kritischer Abstand gegeben, der dann zur Gabe der äußeren Warninformation, also des Lichtsignals, führt. Der Fahrer ist wie gesagt schon lange vor dem Hindernis gewarnt worden, nun erfolgt erstmals eine Warnung nach außen. Sofern das Hindernis eine Person ist, kann diese nun auf das Fahrzeug aufmerksam werden und entsprechend zur Seite treten. Es wird folglich zwischen einer frühzeitigen fahrerseitigen Warnung und einer deutlich späteren Außenwarnung differenziert.

Weitere Vorteile und Einzelheiten der Erfindung ergeben sich aus dem folgenden Ausführungsbeispiel sowie den zugehörigen Zeichnungen. Dabei zeigen:
- Fig. 1: eine Prinzipdarstellung eines erfindungsgemäßen Kraftfahrzeugs, und
- Figuren 2 - 4: Prinzipdarstellungen verschiedener Verkehrssituationen unter Annäherung des Kraftfahrzeugs an ein Hindernis.

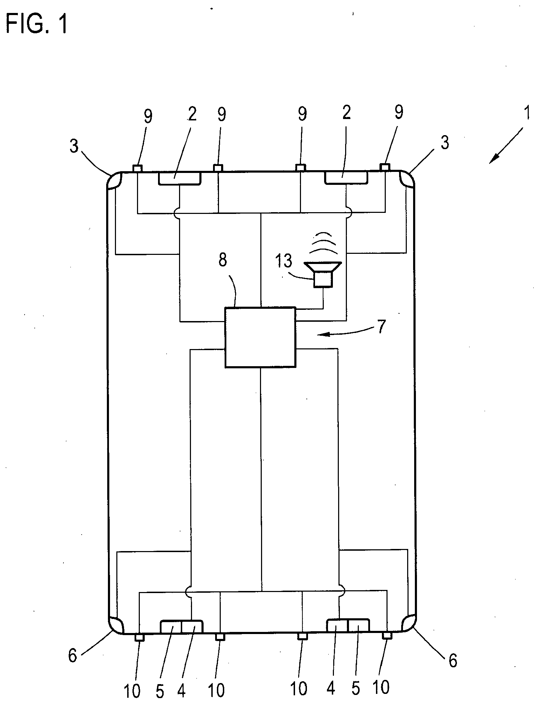

Fig. 1 zeigt eine Prinzipdarstellung eines erfindungsgemäßen Kraftfahrzeugs 1, umfassend Frontscheinwerfer 2, vorderseitige Blinker 3, Rücklichter 4, Bremslichter 5 sowie heckseitige Blinker 6. Allesamt sind von Haus aus fahrzeugseitig verbaute Leuchteinrichtungen.

Vorgesehen ist des Weiteren ein Fahrerassistenzsystem 7, das dazu dient, Hindernisinformationen aus der Umgebung zu erfassen, um im Falle eines erfassten Hindernisses den Fahrer zu warnen, aber auch außerhalb befindliche Personen.

Dieses Fahrerassistenzsystem 7 umfasst zum einen eine Steuerungseinrichtung 8, sowie mehrere frontseitig verbaute Sensoren 9, beispielsweise Ultraschallsensoren, sowie heckseitig verbaute Sensoren, ebenfalls beispielsweise Ultraschallsensoren 10. Sämtliche Sensoren 9, 10 kommunizieren mit der Steuerungseinrichtung 8. Die Sensoren dienen dazu, ein etwaiges Hindernis zu erfassen, wobei die Steuerungseinrichtung anhand der Sensorsignale in der Lage ist, einen Ist-Abstand des Fahrzeugs respektive einer definierten Fahrzeugkante oder -fläche zum Hindernis zu berechnen.

Exemplarisch ist hier dargestellt, dass die Steuerungseinrichtung 8 auch Steuerzugriff auf sämtliche der genannten Leuchteinrichtungen (Frontscheinwerfer 2, Blinker 3, Rücklichter 4, Bremslichter 5, Blinker 6) hat, diese also individuell ansteuern kann. Über eine oder mehrere dieser Leuchteinrichtungen wird, gegebenenfalls räumlich aufgelöst, im Falle der Erfassung eines Hindernisses und Erreichen eines hinreichenden Mindestabstands ein Lichtsignal als Warnsignal nach außen gegeben. Selbstverständlich kommuniziert im realen Fahrzeug die Steuerungseinrichtung 8 mit anderen Steuerungseinrichtungen, die der Ansteuerung der entsprechenden Leuchteinrichtungen dienen. Vorliegend ist Fig. 1 wie beschrieben lediglich eine reine Prinzipdarstellung.

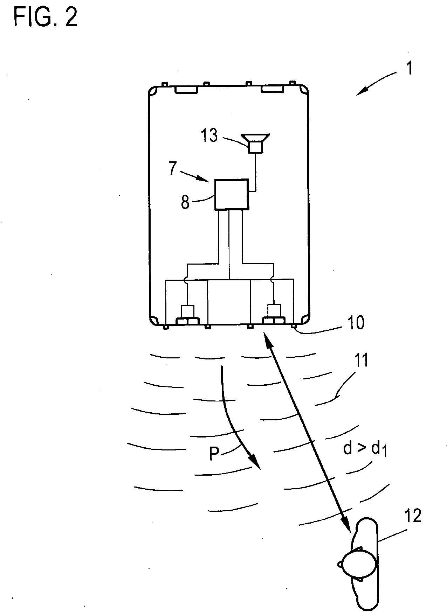

Die Figuren 2 - 4 zeigen drei verschiedene Situationen, wie sie typisch für einen Rückwärts-Einpark-Vorgang sind.

Gezeigt ist das erfindungsgemäße Kraftfahrzeug 1, das rückwärts fährt, wie durch den Pfeil P dargestellt ist. Mit Einlegen des Rückwärtsgangs wird in der Regel das Fahrerassistenzsystem 7 aktiviert, so dass die heckseitig verbauten Ultraschallsensoren 10 ihre Sendesignale 11 aussenden, die der Hindernisdetektion dienen. Entsprechende Reflexionssignale werden von den Ultraschallsensoren 10 erfasst und seitens der Steuerungseinrichtung 8 ausgewertet, um ein etwaiges Hindernis zu detektieren respektive den Abstand zu bestimmen.

Im vorliegenden Fall sei angenommen, dass im über die Sendesignale 11 erfassten Überwachungsbereich ein Hindernis in Form einer Person 12 ist. Dieses Hindernis 12 ist vom Fahrzeug 1 noch hinreichend weit entfernt, nachdem der erfasste Ist-Abstand d größer als ein erster Mindestabstand d₁ ist, wie in Fig. 2 dargestellt ist (d > d₁). Aufgrund des noch großen Abstandes ist eine sich anbahnende Gefahrensituation noch nicht gegeben.

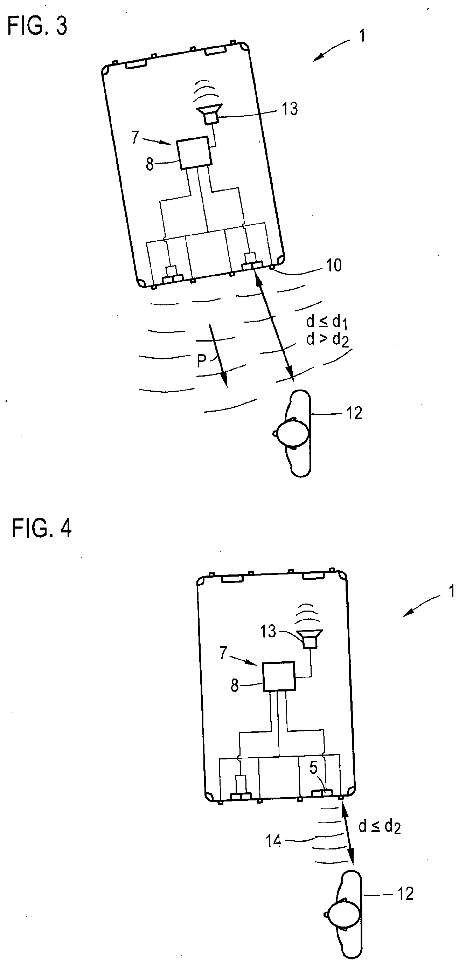

Der Fahrer setzt nun seine Rückwärtsfahrt, siehe Fig. 3, fort, wobei laufend über die Sensoren 10 respektive das Fahrerassistenzsystem 7 als solches der Ist-Abstand d zum Hindernis 12 erfasst wird. In der Situation gemäß Fig. 3 ist der Ist-Abstand d gleich oder kleiner als der erste Mindestabstand d₁ (d ≤ d₁). Beispielsweise beträgt dieser erste Mindestabstand 1,5 m. Sobald dieser Mindestabstand erreicht ist (d = d₁), steuert die Steuerungseinrichtung d einen Warnsignalgeber 13, hier in Form eines Lautsprechers, der sich im Fahrzeuginneren befindet, an. Hierüber wird dem Fahrer im Fahrzeug ein akustisches Warnsignal gegeben, dass er sich einem erfassten Hindernis nähert, wobei der Abstand eben bereits dem Mindestabstand entspricht respektive mit zunehmender Fahrt immer kleiner wird. Die Erfassung erfolgt fortlaufend, wobei sich mit zunehmender Annäherung die Warnsignalgabe auch ändern kann, beispielsweise werden die einzelnen Piepstöne in schnellerer Abfolge oder lauter gegeben etc.

Wie Fig. 3 zeigt, ist der Ist-Abstand d in dieser Situation noch größer als ein zweiter Mindestabstand d₂ (d > d₂). Dieser Mindestabstand d₂ definiert einen Abstand vom Kraftfahrzeug zum Hindernis, mit dessen Erreichen eine zweite Warninformation in Form eines Lichtsignals, das nach außen in Richtung des Hindernisses 12 abgestrahlt wird, gegeben wird. Diese Situation ist noch nicht erreicht, nachdem der Mindestabstand d₂ noch nicht eingenommen ist.

Der Fahrer setzt nun seine Fahrt weiter fort und nähert sich zunehmend dem Hindernis 12 an, was wie beschrieben laufend erfasst wird. Irgendwann nähert sich das Fahrzeug 1 soweit dem Hindernis 12 an, dass der Ist-Abstand d dem zweiten Mindestabstand entspricht (d = d₂). Dies ist als Triggerschwelle für die Gabe eines Lichtsignals in die Umgebung definiert. Die Steuerungseinrichtung 8 steuert daraufhin im gezeigten Ausführungsbeispiel die hintere rechte Bremsleuchte 5 an, um das Lichtsignal 14 zu geben. Durch die Hinderniserfassung ist seitens der Steuerungseinrichtung 8 bekannt, auf welcher Fahrzeugseite sich das Hindernis befindet. Aus diesem Grund ist es möglich, eine richtungsselektive Warnsignalgabe durch Ansteuerung der an dieser Fahrzeugseite befindlichen Bremsleuchte zu geben (alternativ könnte auch der Blinker 6 an dieser Seite angesteuert werden, oder das Rücklicht 4, wie auch mehrere an dieser Seite befindlichen Leuchteinrichtungen 4, 5, 6 angesteuert werden können). Die Bremsleuchte 5 wird dabei so angesteuert, dass sie eine deutlich höhere Lichtstärke zur Gabe des Lichtsignals 14 emittiert, als im normalen Betrieb, wenn der Fahrer das Bremspedal tritt.

Durch dieses Lichtsignal hat nun das Hindernis 12, wie gesagt eine Person, die Möglichkeit, das sich annähernde Fahrzeug zu erfassen. Das Fahrzeug ist bereits relativ nah, beispielsweise beträgt der zweite Mindestabstand d₂ 50 cm. Ganz offensichtlich ist die Person 12 nicht auf das Fahrzeug 1 aufmerksam geworden, da sie sich, ausgehend von der Situation gemäß Fig. 2, bis zur Situation gemäß Fig. 4 nicht bewegt hat. Durch dieses lichtoptische Warnsignal kann die Person nun das Fahrzeug erfassen und zur Seite treten, so dass eine Unfallgefahr vermieden wird.

Zeitgleich wird natürlich dem Fahrer über die Signalgabeeinrichtung 13 kontinuierlich die zunehmende Annäherung an das Hindernis mitgeteilt, so dass der Fahrer ebenfalls entsprechend reagieren kann. Setzt er seine Fahrt weiter fort, so wird ihm beispielsweise kurz nach Erreichen des zweiten Mindestabstands d₂ ein aggressiver Dauerwarnton gegeben, um ihn auf das noch vorhandene Hindernis aufmerksam zu machen.

Es ist ersichtlich eine gestufte Warnsignalgabe vorgesehen, das heißt, dass der Fahrer deutlich früher vor der Annäherung an das Hindernisses gewarnt wird, nämlich wenn d = d₁, während die Umgebung, also die Person selbst, erst deutlich später gewarnt wird, wenn nämlich d = d₂. Dies ist auch ausreichend, nachdem in aller Regel davon auszugehen ist, dass eine Person ein sich näherndes Kraftfahrzeug erfasst und rechtzeitig zur Seite tritt. Dies ist jedoch, nicht zuletzt aufgrund der geringen Motorgeräusche respektive fehlender Motorgeräusche im Falle von Elektrofahrzeugen, nicht immer der Fall. Mit dem erfindungsgemäßen Kraftfahrzeug respektive dem erfindungsgemäß ausgeführten Fahrerassistenzsystem 7, das in der Lage ist, das Lichtsignal nach außen abzugeben, ist eine Warnung jedoch möglich.

## Patentansprüche

1. Kraftfahrzeug, umfassend :
- eine Einrichtung (7) zur Erfassung eines Abstands zu einem in der Nähe des Fahrzeugs befindlichen Hindernis sowie zur Ausgabe einer Warninformation bei Erreichen eines definierten Mindestabstands zu dem Hindernis,
- Leuchteinrichtungen (2, 3, 4, 5, 6), die jeweils einen normalen Betrieb mit einer bestimmten Lichtstärke aufweisen,
wobei als Warninformation mittels wenigstens einer der Leuchteinrichtungen (2, 3, 4, 5, 6) ein Lichtsignal (14) gebbar ist, das zumindest außerhalb des Fahrzeugs (1) sichtbar ist,
wobei die Einrichtung (7) zur räumlich aufgelösten Erfassung eines Hindernisses (12) ausgebildet ist,
wobei, erst wenn ein Mindestabstand zu einem Hindernis (12) erfasst wird, diejenige Leuchteinrichtung (2, 3, 4, 5, 6) gewählt wird, die benachbart zum Hindernis (12) ist,
**dadurch gekennzeichnet, dass** das Lichtsignal (14) mit einer verglichen mit dem Normalbetrieb der Leuchteinrichtung (2, 3, 4, 5, 6) erhöhten Lichtstärke gegeben wird.

2. Kraftfahrzeug nach Anspruch 1,
**dadurch gekennzeichnet,**
**dass** die Leuchteinrichtung eine Blinkleuchte (3, 4), eine Bremsleuchte (5), eine Rückfahrleuchte (6) oder ein Frontscheinwerfer (2) ist.

3. Kraftfahrzeug nach einem der vorangehenden Ansprüche,
**dadurch gekennzeichnet,**
**dass** das Lichtsignal (14) in Form mehrerer hintereinander folgender Lichtpulse gebbar ist.

4. Kraftfahrzeug nach einem der vorangehenden Ansprüche,
**dadurch gekennzeichnet,**
**dass** die Einrichtung (7) zur Gabe eines akustischen oder optischen, im Fahrzeuginnenraum erfassbaren Warnsignals bei Erfassung eines ersten Mindestabstands (d₁) zum Hindernis (12) und zur Gabe des Lichtsignals (14) erst bei Erfassung eines zweiten, kürzeren Mindestabstands (d₂) ausgebildet ist.

## Claims

1. Motor vehicle, comprising:
- a device (7) for detecting a distance from an obstacle located in the vicinity of the vehicle and for delivering warning information when a defined minimum distance from the obstacle is reached,
- light devices (2, 3, 4, 5, 6), which respectively have a normal operation with a particular luminous intensity,
wherein a light signal (14), which is visible at least outside the vehicle (1), can be emitted by means of at least one of the light devices (2, 3, 4, 5, 6) as a warning information,
wherein the device (7) is configured for spatially resolved detection of an obstacle (12),
wherein, only after a minimum distance from an obstacle (12) has been detected, the light device (2, 3, 4, 5, 6) which is closest to the obstacle (12) is selected,
**characterised in that** the light signal (14) is emitted with an increased luminous intensity compared with the normal operation of the light device (2, 3, 4, 5, 6).

2. Motor vehicle according to claim 1,
**characterised in that**
the light device is a flashing light (3, 4), a brake light (5), a reversing light (6) or a front headlamp (2).

3. Motor vehicle according to one of the preceding claims,
**characterised in that**
the light signal (14) can be emitted in the form of a plurality of successive light pulses.

4. Motor vehicle according to one of the preceding claims,
**characterised in that**
the device (7) is configured in order to deliver an acoustic or optical warning signal, which can be perceived in the vehicle interior, when a first minimum distance (d₁) from the obstacle (12) is detected, and to deliver the light signal (14) only when a shorter second minimum distance (d₂) is detected.

## Revendications

1. Véhicule automobile, comprenant :
- un dispositif (7), destiné à détecter une distance à un obstacle se trouvant à proximité du véhicule ainsi qu'à délivrer une information d'avertissement lorsqu'une distance minimale définie à l'obstacle est atteinte,
- des dispositifs d'éclairage (2, 3, 4, 5, 6), qui présentent à chaque fois un fonctionnement normal avec une certaine intensité lumineuse,
dans lequel un signal lumineux (14), qui est visible au moins à l'extérieur du véhicule (1), peut être donné comme information d'avertissement au moyen d'au moins un des dispositifs d'éclairage (2, 3, 4, 5, 6),
dans lequel le dispositif (7) est conçu pour la détection spatiale d'un obstacle (12),
et dans lequel, seulement si une distance minimale à un obstacle (12) est détectée, on choisit celui des dispositifs d'éclairage (2, 3, 4, 5, 6) qui est voisin de l'obstacle (12),
**caractérisé en ce que** le signal lumineux (14) est donné avec une intensité lumineuse accrue en comparaison du fonctionnement normal du dispositif d'éclairage (2, 3,4,5,6).

2. Véhicule automobile selon la revendication 1,
**caractérisé en ce que**
le dispositif d'éclairage est un feu clignotant (3, 4), un feu de stop (5), un feu de recul (6) ou un projecteur avant (2).

3. Véhicule automobile selon l'une des revendications précédentes,
**caractérisé en ce que**
le signal lumineux (14) peut être donné sous la forme de plusieurs impulsions lumineuses successives.

4. Véhicule automobile selon l'une des revendications précédentes,
**caractérisé en ce que**
le dispositif (7) est conçu pour donner un signal d'avertissement acoustique ou optique, pouvant être perçu dans l'habitacle du véhicule automobile, lors de la détection d'une première distance minimale (d₁) à l'obstacle (12) et pour donner le signal lumineux (14) seulement lors de la détection d'une deuxième distance minimale (d₂) plus courte.
